(19) Europäisches Patentamt
European Patent Office
Office européen des brevets

(11) Veröffentlichungsnummer: **0 259 625 A1**

(12) # EUROPÄISCHE PATENTANMELDUNG

(21) Anmeldenummer: **87111537.4**

(22) Anmeldetag: **10.08.87**

(51) Int. Cl.4: **C08G 77/38**, C08G 77/12

(30) Priorität: **21.08.86 DE 3628319**

(43) Veröffentlichungstag der Anmeldung:
**16.03.88 Patentblatt 88/11**

(84) Benannte Vertragsstaaten:
**BE DE ES FR GB IT NL**

(71) Anmelder: **BAYER AG**
**Konzernverwaltung RP Patentabteilung**
**D-5090 Leverkusen 1 Bayerwerk(DE)**

(72) Erfinder: **Grape, Wolfgang, Dr.**
**Roggendorfstrasse 51**
**D-5000 Köln 80(DE)**
Erfinder: **Schlak, Ottfried, Dr.**
**Kalkweg 2**
**D-5000 Köln 80(DE)**
Erfinder: **Braun, Rolf, Dr.**
**Mergelskull 8**
**D-4150 Krefeld 1(DE)**

(54) **Organopolysiloxanöle.**

(57) Die vorliegende Erfindung betrifft neue Organopolysiloxane der allgemeinen Formel

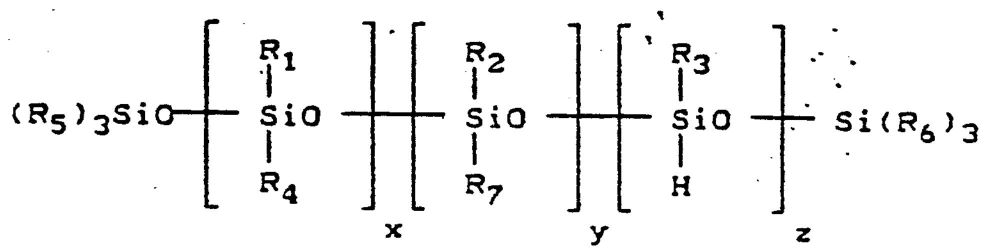

wobei
$x$ = 0 bis 500,
$y$ = 5 bis 500,
$z$ = 5 bis 500,
$R_1$, $R_2$, $R_3$, $R_4$, $R_5$ und $R_6$ unabhängig voneinander für einen gesättigten und/oder ungesättigten, gegebenenfalls auch verzweigten Alkylrest mit 1 bis 4 C-Atomen und/oder für einen Arylrest mit 6 bis 9 C-Atomen stehen, der gegebenenfalls auch alkylsubstituiert sein kann,
$R_7$ für einen Alkylrest mit 6 bis 18 C-Atomen steht

und
wobei von den an Si gebundenen Resten jeweils mindestens 3 % $R_7$ und H sind.

EP 0 259 625 A1

## Organopolysiloxanöle

Die vorliegende Erfindung betrifft neue Organopolysiloxane der allgemeinen Formel

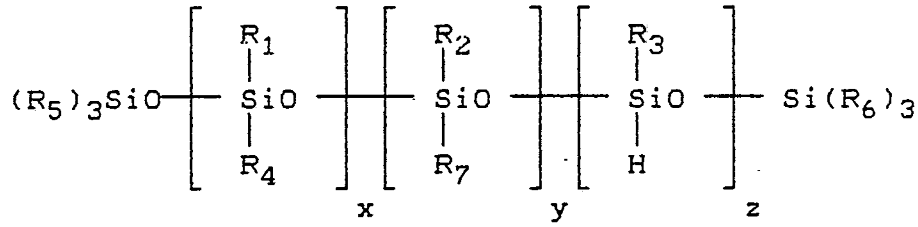

wobei

x = 0 bis 500,

y = 5 bis 500,

z = 5 bis 500,

$R_1$, $R_2$, $R_3$, $R_4$, $R_5$ und $R_6$ unabhängig voneinander für einen gesättigten und/oder ungesättigten, gegebenenfalls auch verzweigten Alkylrest mit 1 bis 4 C-Atomen und/oder für einen Arylrest mit 6 bis 9 C-Atomen stehen, der gegebenenfalls auch alkylsubstituiert sein kann,

$R_7$ für einen Alkylrest mit 6 bis 18 C-Atomen steht

und

wobei von den an Si gebundenen Resten jeweils mindestens 3 % $R_7$ und H sind.

Die Erfindung betrifft weiterhin die Verwendung derartiger Organopolysiloxane (im folgenden auch als Siliconöle bezeichnet) zur Imprägnierung bzw. Beschichtung von Textilien, Glasfaser, Gips und anorganisch-oxidischen Materialien (z. B. Mauerwerk.).

Die Erfindung betrifft weiterhin die Verwendung der erfindungsgemäßen Siliconöle zur Modifizierung von organischen Bindemitteln und Kunststoffen wie Polyethylen, Polypropylen, Polyester, Polyurethan, Polycarbonat usw.

Polydimethylsiloxane der allgemeinen Formel

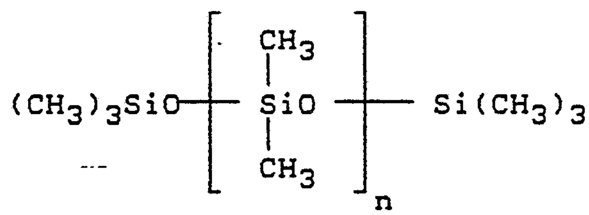

können unter anderem zur Hydrophobierung verschiedener Oberflächen eingesetzt werden (vg. Noll, Chemie und Technologie der Silicone, 2. Auflage 1968, S. 386 ff).

Bei der Hydrophobierung von Textilien beispielsweise macht sich jedoch nachteilig bemerkbar, daß bei derartigen Siliconölen keine Fixierung auf dem Textil erfolgt. Textilausrüstungen mit reinen Polydimethylsiloxanen sind daher nicht waschmaschinenbeständig.

Es wurde daher vorgeschlagen, Siliconöle zu verwenden, die SiH-Einheiten enthalten, die zur Reaktion mit der Textiloberfläche befähigt sind, d. h. entweder Siliconöle der allgemeinen Formel

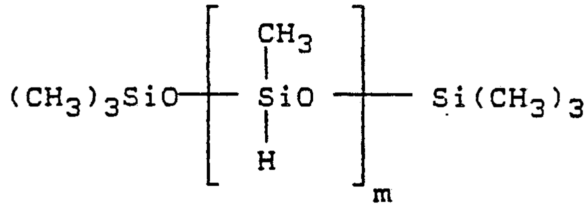 oder

Siliconöle der allgemeinen Formel

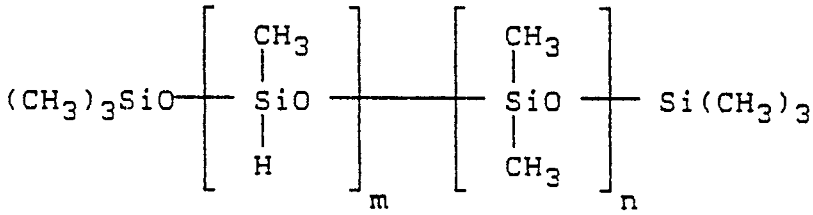

(vgl. M. Seidel, H. Kiesling, Textilveredlung 20 (1985), S. 8).

Das hier für Textiloberflächen Gesagte gilt analog für die Oberflächen von anorganischen Pigmenten z. B. $TiO_2$-Pigmenten oder anderen Oxiden mit oberflächlich gebundenen OH-Resten.

Siliconöle mit langkettigen Alkylresten am Silicium sind ebenfalls bekannt,. z. B. aus der DE-A 3 436 164.

Dort werden Siliconöle der allgemeinen Formel

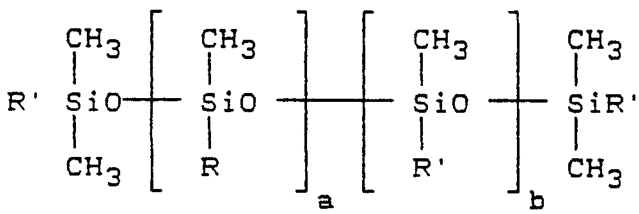

beschrieben, wobei

R für einen geradkettigen Alkylrest mit 6 bis 18 C-Atomen oder einen verzweigten Alkylrest mit 6 bis 16 C-Atomen steht,

R′ geradkettige oder verzweigte Alkylreste mit 1 bis 7C-Atomen oder den Phenylrest bedeutet und

a und b ganze Zahlen von 1 bis 500 bedeuten, wobei das Verhältnis b : a größer als 2 ist;

mit einem Pourpoint (gemäß DIN 51 583) unterhalb -15°C.

Diese Siliconöle dienen als Basisfluide für Schmierölbereitungen, da die üblichen Additive in diesen Ölen in ausreichender Menge klar löslich sind, sie sind aber auch mischbar mit Mineralölen unterschiedlicher Provenienz.

Siliconöle, die sowohl SiH-Gruppen enthalten und damit z.B. die Haftung an zu hydrophobierenden Oberflächen ermöglichen, als auch längere Alkylreste enthalten und damit z. B. die Mischbarkeit mit organischen materialien verbessern, sind in der Literatur nicht beschrieben.

Überraschenderweise wurde nun gefunden, daß sich bei vielen Anwendungen ein synergistischer Effekt aus dem gleichzeitigen Vorhandensein von SiH-und längeren Alkylgruppen im Molekül des Siliconöls ergibt.

Aufgabe der vorliegenden Erfindung war es daher, Siliconöle bereitzustellen, die in einem Molekül sowohl SiH-Gruppen als auch längere Alkylgruppen enthalten.

Gegenstand der vorliegenden Erfindung sind somit Siliconöle der allgemeinen Formel

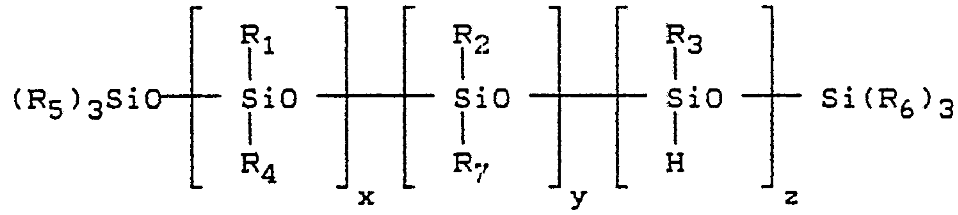

wobei
x = 0 bis 500
y = 5 bis 500
z = 5 bis 500

$R_1$, $R_2$, $R_3$, $R_4$, $R_5$ und $R_6$ unabhängig voneinander für einen gesättigten und/oder ungesättigten, gegebenenfalls auch verzweigten Alkylrest mit 1 bis 4 C-Atomen und/oder einen Arylrest mit 6 bis 9 C-Atomen stehen, der gegebenenfalls auch alkylsubstituiert sein kann,

$R_7$ für einen Alkylrest mit 6 bis 18 C-Atomen steht und wobei von den an Si gebundenen Resten jeweils mindestens 3 % $R_7$ und H sind.

In den Endgruppen können die Reste $R_5$ und $R_6$ jeweils auch für unterschiedliche Substituenten stehen, was bedeutet, daß an einem endständigen Siliciumatom auch unterschiedliche Substituenten gebunden sein können.

Vorzugsweise steht für die Reste $R_1$, $R_2$, $R_3$, $R_4$, $R_5$ und $R_6$ eine Methylgruppe.

Beispiele für geradkettige Reste $R_7$ sind Hexyl-, Octyl-, Nonyl-, Decyl-, Dodecyl-und Tetradecylreste. $R_7$ kann jedoch auch ein verzweigter Alkylrest sein. Beispiele für verzweigt Alkylreste sind 3-methylpentyl-, 2,3-Dimethylbutyl-, 3-Butylhexyl-und 4-Propyloctylreste. Dabei können die Öle jeweils gleiche oder auch unterschiedliche Reste R enthalten. Besonders bevorzugte Alkylreste R sind de Dodecyl-und der Tetradecylrest, insbesondere auch Gemische aus beiden.

Vorzugsweise werden x, y und z so gewählt, daß

x = 5 bis 50,
y = 5 bis 50 und
z = 5 bis 50 ist.

Ebenfalls bevorzugt sind Siliconöle mit

x = 0,
y = 5 bis 25 und
z = 5 bis 25.

Die Herstellung der erfindungsgemäßen Organopolysiloxane kann beispielsweise so durchgeführt werden, daß man zunächst ein Öl der allgemeinen Formel

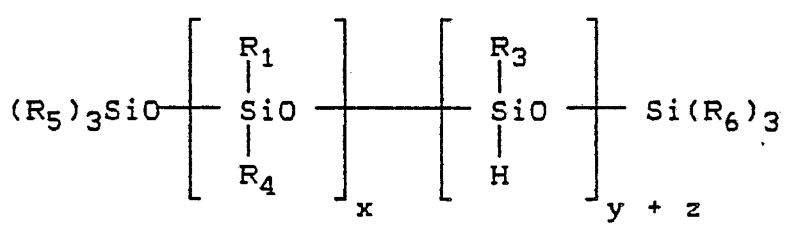

herstellt und danach in einem zweiten Schritt eine Pt-katalysierte Addition von y Molen α-Olefin pro Mol Siliconöl durchführt.

Es ist jedoch auch möglich, die erfindungsgemäßen Siliconöle direkt aus den entsprechenden Chlorsilanen durch Hydrolyse und Abtrennung der entstehenden Säure herzustellen. Darüber hinaus ist es ebenfalls möglich, zwei Siliconöle, die jeweils SiH-bzw. $SiR_7$-Gruppen enthalten, einer sauren Äquilibrierungsreaktion zu unterwerfen, um so die erfindungsgemäßen Siliconöle herzustellen.

Die erfindungsgemäßen Siliconöle können weiterhin geringe Mengen an Verzweigungen aufweisen und/oder geringe Mengen an Phenylsiloxanen enthalten, ohne daß dies das Eigenschaftsbild wesentlich beeinträchtigt.

Weiterhin können die erfindungsgemäßen Öle auch OR'-Endgruppen enthalten (mit R' = Methyl-, Ethyl, Propyl-); der Gehalt an SiOH-Gruppen sollte dagegen möglichst gering sein, um durch Reaktion mit den SiH-Gruppen die Lagerbeständigkeit nicht zu beeinträchtigen.

Die verwendeten Pt-Katalysatoren sind wohlbekannt; dabei kann es sich um Platin oder Platinverbindungen handeln; auf Trägermaterial fixiert, dispergiert bzw. gelöst.

Bevorzugt werden solche Katalysatorlösungen eingesetzt, wie sie z. B. in US-A 2 823 218 beschreiben sind.

Die Durchführung der Reaktion zur Addition von $\alpha$-Olefinen an SiH-Bindungen ist an sich bekannt und wird z. B. in W. Noll, Chemie und Technologie der Silicone, 2. Auflage 1968, S. 45, beschrieben.

Die Additionsreaktion wird gezielt so durchgeführt, daß im Endprodukt mindestens 3 % aller am Silicium gebundenen Reste Wasserstoffreste sind. Besonders bevorzugt ist, dß mindestens 10 % aller am Silicium gebundenen Reste Wasserstoffreste sind. Besonders bevorzugt ist weiterhin, daß $x = 0$ ist.

Die erfindungsgemäßen Siliconöle werden bevorzugt überall dort verwendet, wo gleichzeitig die Eigenschaftsbilder der SiH-Gruppe und der $SiR_7$-Gruppe, kombiniert in einem Molekül, zum Tragen kommen.

Ein typisches Beispiel ist die Verwendung der erfindungsgemäßen Öle zur Modifizierung von Pigmenten; dabei fixiert die SiH-Gruppe das Molekül durch Reaktion unter Wasserstoffabspaltung auf der Pigmentoberfläche und die $SiR_7$-Gruppe bewirkt gleichzeitig und dauerhaft eine verbesserte Bindemittel-Verträglichkeit und eine Verringerung des Staubens.

Ein anderes typisches Beispiel ist die Imprägnierung von mineralischem Mauerwerk mit hoher Alkalität; dabei bewirkt die SiH-Gruppe durch Reaktion eine Fixierung im Mauerwerk und die $SiR_7$-Gruppe eine deutlich verbesserte Alkalibeständigkeit der Imprägnierung.

In beiden Beispielen führen Abmischungen aus einem SiH-Gruppen-haltigen Siliconöl und einem $SiR_7$-Gruppen-haltigen Siliconöl nur zu einem unbefriedigenden Ergebnis.

Falls die erfindungsgemäßen Siliconöle aus Gründen der Verteilung nicht in konzentrierter Form angewendet werden können, ist es durchaus möglich, wässrige Emulsionen oder Lösungen in organischen Lösungsmitteln herzustellen.

Die Herstellung der erfindungsgemäßen Öle wird im folgenden anhand von zwei typischen Beispielen beschrieben; dabei beziehen sich alle Angaben von Teilen und Prozentsätzen auf das Gewicht, soweit nicht anders angegeben ist. Beispiel 3 zeigt ergänzend die Emulgierung des Siliconöls aus Beispiel 1.

## Beispiel 1

In einem Reaktionskessel werden 197 Teile eines Methylhydrogenpolysiloxans mit Trimethylsilylendgruppen der Viscosität 15 mm²/s vorgelegt und dieses mit 10 ppm Pt (gerechnet als Metall und in Form einer Lösung von Hexachloroplatinsäure in Isopropanol) versetzt.

Der Kessel wird auf 120°C erwärmt. Man läßt bei dieser Temperatur während vier Stunden ein Gemisch aus 109 Teilen $\alpha$-Dodecen und 69 Teilen $\alpha$-Tetradecen zulaufen. Nach 6 Stunden Nachrühren bei 130°C wird abgekühlt und abgelassen.

Es resultiert ein Öl mit einer Viskosität von 140 mm²/s bei dem ca. 1/3 der ursprünglich vorhandenen SiH-Gruppen in SiR-Gruppen umgewandet worden sind. Das Öl hat die Zusammensetzung

$$(CH_3)_3O - \left[ \begin{array}{c} CH_3 \\ | \\ SiO \\ | \\ H \end{array} \right]_{20} \left[ \begin{array}{c} CH_3 \\ | \\ SiO \\ | \\ R \end{array} \right]_{10} - Si(CH_3)_3$$

mit $R = C_{12}H_{25}/C_{14}H_{29}$-Gemisch.

Beispiel 2

In ein Reaktionsgefäß werden 232 Teile des gleichen Methylhydrogenpolysiloxans wie in Beispiel 1 vorgelegt und 87 Teile Octamethylcyclotetrasiloxan und 5000 ppm Perfluorbutansulfonsäure (bezogen auf Ansatz) zugefügt. Nach 7 Stunden Rühren bei 50°C wird mit Zinkoxid neutralisiert, bis zu einer Temperatur von 130°C bei 30 - 40 mbar ausgeheizt, abgekühlt und filtriert. Es resultieren 271 Teile eines Siliconöls der Formel

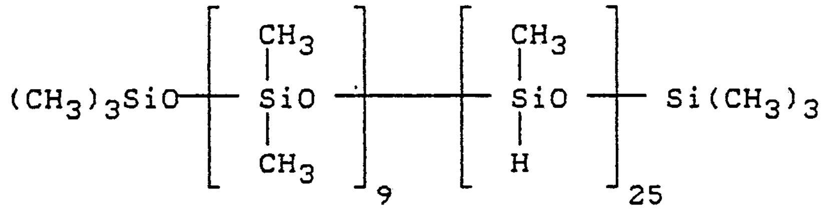

Dieses Öl läßt man wie in Beispiel 1 mit 109 Teilen α-Dodecen und 69 Teilen α-Tetradecen reagieren. Es resultiert ein Öl der Formel

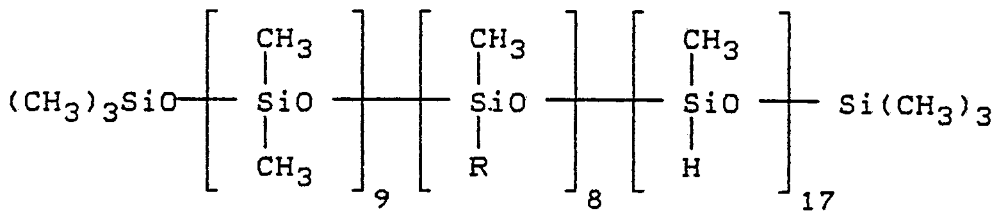

Beispiel 3 : Emulgierung des Siliconöls aus Beispiel 1

513 g Wasser werden in einem 1 1-Becherglas vorgelegt und mit einem Ankerrührer mit 250 U/Min. gerührt. Es werden 14,6 g eines nichtionischen Emulgators (Polyoxyethylentriglycerid mit einem HLB-Wert von 18,1) eingetragen. Nachdem dieser erste Emulgator homogen gelöst ist, werden 12,4 g eines zweiten Emulgators zugefügt (Polyoxyethylen(6)tridecylalkohol mit einem HLB-Wert von 11,4).

Anschließend wird das erfindungsgemäße Siliconöl aus Beispiel 1 innerhalb von einer Stunde zudosiert. Dann wird 30 Minuten nachgerührt und 9 × mittels einer Hochdruckemulgiermaschine bei 200 bar homogenisiert.

Die Emulsion wird mit einigen Tropfen HC1 auf pH 3 eingestellt.

## Ansprüche

1) Organopolysiloxane der allgemeinen Formel

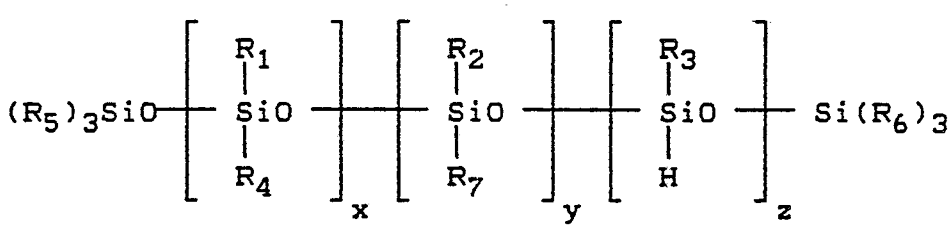

wobei

x = 0 bis 500,

y = 5 bis 500,

z = 5 bis 500,

$R_1$, $R_2$, $R_3$, $R_4$, $R_5$ und $R_6$ unabhängig voneinander für einen gesättigten und/oder ungesättigten, gegebenenfalls auch verzweigten Alkylrest mit 1 bis 4 C-Atomen und/oder für einen Arylrest mit 6 bis 9 C-Atomen stehen, der gegebenenfalls auch alkylsubstituiert sein kann,

$R_7$ für einen Alkylrest mit 6 bis 18 C-Atomen steht und wobei von den an Si gebundenen Resten jeweils mindestens 3 % $R_7$ und H sind.

2) Organopolysiloxane gemäß Anspruch 1, dadurch gekennzeichnet, daß die Reste $R_1$, $R_2$, $R_3$, $R_4$, $R_5$ und $R_6$ für eine Methylgruppe stehen.

3) Organopolysiloxane gemäß Anspruch 1 oder 2, dadurch gekennzeichnet, daß $R_7$ für einen Dodecyl- und/oder Tetradecylrest steht.

4) Organopolysiloxane gemäß einem der Ansprüche 1 bis 3, dadurch gekennzeichnet, daß

x = 5 bis 50,
y = 5 bis 50 und
z = 5 bis 50 ist.

5) Organopolysiloxane gemäß einem der Ansprüche 1 bis 3, dadurch gekennzeichnet, daß
x = 0,
y = 5 bis 25 und
z = 5 bis 25 ist.

6) Verfahren zur Herstellung von Organopolysiloxanen gemäß einem der Ansprüche 1 bis 5, dadurch gekennzeichnet, daß an ein Organopolysiloxan der allgemeinen Formel

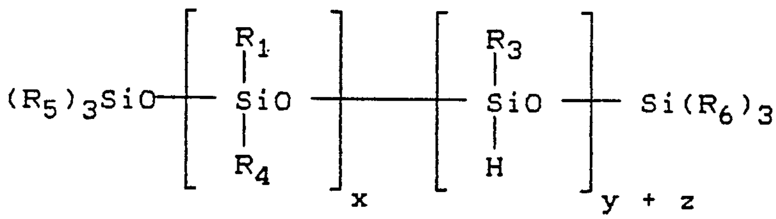

wobei

x, y, z, $R_1$, $R_3$, $R_4$, $R_5$ und $R_6$ die o.g. Bedeutung besitzen, y Mole eines α-Olefins pro Mol Siliconöl in Gegenwart eines Platin-Katalysators addiert werden.

Europäisches Patentamt

# EUROPÄISCHER RECHERCHENBERICHT

Nummer der Anmeldung

EP 87 11 1537

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 450 736 (F.G.M. DE MONTEREY)<br>* Anspruch 1; Spalte 1, Zeilen 30-42; Spalte 2, Zeilen 52-67; Spalte 4, Zeilen 30-42 *<br>--- | 1-6 | C 08 G 77/38<br>C 08 G 77/12 |
| A | US-A-4 011 247 (Y. SATO)<br>* Anspruch 1 *<br>--- | 1 | |
| A | GB-A- 630 911 (THOMSON-HOUSTON)<br>* Anspruch 1 *<br>----- | 1 | |
| | | | **RECHERCHIERTE SACHGEBIETE (Int. Cl.4)** |
| | | | C 08 G |

Der vorliegende Recherchenbericht wurde für alle Patentansprüche erstellt

| Recherchenort | Abschlußdatum der Recherche | Prüfer |
|---|---|---|
| DEN HAAG | 04-12-1987 | DEPIJPER R.D.C. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)